Europäisches Patentamt

**European Patent Office**

Office européen des brevets

(19)

(11) Publication number : **0 418 031 B1**

(12)

# EUROPEAN PATENT SPECIFICATION

(45) Date of publication of patent specification :
**05.01.94 Bulletin 94/01**

(51) Int. Cl.⁵ : **C09J 119/02, C09J 109/08**

(21) Application number : **90309931.5**

(22) Date of filing : **11.09.90**

(54) **Producing adhesively edge-padded paper tablets with a fast-drying latex adhesive.**

(30) Priority : **11.09.89 US 405190**

(43) Date of publication of application :
**20.03.91 Bulletin 91/12**

(45) Publication of the grant of the patent :
**05.01.94 Bulletin 94/01**

(84) Designated Contracting States :
**DE ES FR GB IT NL SE**

(56) References cited :
**US-A- 4 571 412**
**DERWENT ACCESSION NO. 87-182 239, Ques-**
**tel Tele- systems (WPIL), DERWENT PUBLI-**
**CATIONS LTD., London; & JP-A-62 112 675**

(73) Proprietor : **MINNESOTA MINING AND**
**MANUFACTURING COMPANY**
**3M Center, P.O. Box 33427**
**St. Paul, Minnesota 55133-3427 (US)**

(72) Inventor : **Emery, Clair J., c/o Minnesota**
**Mining and**
**Manufact. Co., 2501 Hudson Road, P.O. Box**
**33427**
**St. Paul, Minnesota 55133 (US)**
Inventor : **Perrington, Kenneth J., c/o**
**Minnesota Mining and**
**Manufact. Co., 2501 Hudson Road, P.O. Box**
**33427**
**St. Paul, Minnesota 55133 (US)**

(74) Representative : **Baillie, Iain Cameron et al**
**c/o Ladas & Parry Altheimer Eck 2**
**D-80331 München (DE)**

## Description

### Field of the Invention

The invention concerns the production of paper tablets by adhesively edge-padding a stack of paper with a latex adhesive and, after allowing the adhesive to dry, cutting the stack into individual tablets. The term "tablet" is here used to encompass books, reports, ledgers, and the like.

### Description of the Related Art

Paper tablets can be assembled by brushing an adhesive onto one edge of a stack of paper. Usually, the stack includes a piece of chipboard (cardboard) that forms the base of each tablet. After the adhesive has dried, the stack is cut by hand with a knife at the underside of each piece of chipboard to produce individual tablets, each of which has an adhesive edge-padding.

In use, individual sheets of the tablet can be successively peeled from the adhesive edge-padding and sometimes are torn in doing so. The removal of a number of sheets typically leaves an upstanding ridge of the adhesive edge-padding which gradually becomes unsightly due to fragments of torn sheets and also due to pieces of the upstanding ridge breaking off from time to time. When a piece of the ridge is torn off, it sometimes carries with it part of the edge-padding for the underlying sheets, thus exacerbating the unsightliness of the tablet and sometimes causing the remaining sheets to become loose.

Three of the leading adhesives for making adhesively edge-padded tablets are "Merit" padding adhesive from Merrit Products Co., Painesville, OH; "Hurst Graphics" padding compound from Hurst Graphics, Los Angeles, CA; and "Champadco" padding cement from Champion Mfg. Co., Charlotte, N.C. Each of these is believed to be a latex based upon polyvinyl acetate containing a plasticizer such as an ortho-phthalate ester and a viscosity-modifying agent. While claims have been made that such edge-padding adhesives dry within about one-half hour, it has been found that when used to form a stack of paper tablets, such edge-paddings require overnight drying before the stack is cut into individual tablets. Any effort to cut the stack sooner tends to cause the adhesive edge-padding to gum up, making it impossible to keep the knife from veering off. Such drying time virtually precludes large-scale manufacture, because of the large space that would be required for allowing the stacks to dry.

Because of the foregoing problems, the edges of many paper tablets are bound like paperback books, and the sheets are perforated to permit individual removal. Such tablets are not only more expensive to assemble, but there is waste in the portions of the paper sheets that remain with the binding.

### Other Prior Art

A large number of latex adhesives are based on ethylene/vinyl acetate (EVA) copolymers which are inexpensive and can be compounded with inexpensive materials to form strong bonds to a great variety of substrates. For a discussion of EVA copolymers, see a brochure entitled "Airflex 300 Base for Adhesives" from Air Products and Chemicals, Inc., 1980. That brochure says that "Airflex" 300 is an EVA copolymer and lists 22 uses including "Bookbinding" and "Padding". It teaches that the viscosity of an EVA latex can be increased with additives such as cellulosic thickeners and plasticizers such as dibutyl phthalate; that plasticizers also improve specific adhesion; that wet tack can be enhanced by adding tackifying resins; and that the setting speed of the latex "can be improved by adding plasticizer, solvents or tackifying resins."

For a discussion of styrene/butadiene (SB) copolymers, see a brochure entitled "Dow Designed Latexes For speciality Applications," Form No. 191-193-86 from Dow Chemical Co.

We are not aware of any latex adhesive that is based on either an EVA or SB copolymer and is specifically formulated and marketed for adhesively edge-padding paper tablets.

### Summary of the Invention

The invention provides what is believed to be the first edge-padding adhesive that dries so quickly that an adhesively edge-padded stack of paper sheets can be easily cut by hand into tablets within 30 minutes. Furthermore, the invention provides what is believed to be the first adhesively edge-padded tablet that does not leave an upstanding ridge of adhesive when a number of the sheets are torn off, thus avoiding the problem of unsightliness discussed above.

Briefly, the invention concerns the production of paper tablets by

1) adhesively edge-padding a stack of paper with a latex adhesive which has a viscosity at room temperature of from 600 to 8000 cps (Brookfield Spindle #6, 100 rpm) and comprises by weight:

a) from 25 to 40 parts (dry basis) of a latex of a polymer having a Tg from -10° to 30°C, which latex when blended with a non-crystallizing polyhydric alcohol is film-forming,

b) from 10 to 22 parts of at least one low-boiling alcohol,

c) from 3 to 9 parts of at least one non-crystallizing polyhydric alcohol, and

d) water in an amount to provide 100 parts of ingredients a) through d), and

2) allowing the applied latex adhesive to dry.

In order to achieve a viscosity of at least 600 cps, it may be necessary for the latex adhesive to include at least 0.1 part of a cellulose thickener, the presence of which enables the desired viscosity to be achieved at relatively low amounts of polymer, thus keeping the cost of the latex adhesive at a minimum. Furthermore, the presence of a cellulose thickener affords increased adhesion. Usually, the desired viscosity can be attained by using up to 1.5 parts of cellulose thickener, but greater amounts may be necessary when a less efficient cellulose thickener is used. Preferred cellulose thickeners include hydroxyethyl cellulose, carboxymethyl cellulose, and hydroxypropyl cellulose. The first of these is available at moderate cost as "Natrosol" from Aqualon, USA.

Preferred as the latex are EVA and SB copolymers, both of which afford latex adhesives of the invention that when used to form edge-padded tablets afford fast drying and excellent adhesion. Each also is inexpensive and readily available commercially. Other useful polymers include polyvinyl acetate, butadiene/vinyl toluene copolymers, and styrene/isoprene copolymers.

## Detailed Disclosure

Preferably, the viscosity at room temperature of the latex adhesive is from 1000 to 5000 cps so that it flows smoothly onto the edge of the stack of paper, readily penetrates between adjacent sheets, and leaves such a thin spine on the edge of the stack that the spine is carried off as each sheet is removed. Hence, a partially used tablet has no upstanding ridge of dried adhesive such as occurs in adhesively edge-padded tablets of the prior art. If the viscosity were substantially above 5000 cps, such a ridge might develop. On the other hand, if the viscosity were substantially below 1000 cps, the latex adhesive can tend to penetrate too far into the stack and thus fail to ensure the integrity of the tablet in ordinary shipment and handling. If the dried latex adhesive did afford sufficient integrity even though the latex penetrated far into the stack, it might result in tearing of the sheets upon their individual removal.

When the polymer solids provide substantially less than 25% by weight of the latex adhesive, the dried adhesive tends to be deficient in adhesion to paper. At amounts greater than 35% by weight, adhesion to paper is not appreciably increased, and because the polymer is more expensive than the other ingredients, the cost of the latex adhesive would be increased without any offsetting advantage. If the polymer solids were to provide substantially more than 40% by weight of the latex adhesive, it would be difficult to keep the viscosity below 8000 cps at room temperature, thus resulting in an overly thick spine and a tendency to leave an undesired ridge as sheets are removed.

For purposes of this invention, low boiling alcohols can be considered those having a boiling point below 120°C.

Preferred low-boiling alcohols are isopropanol and ethanol. N-propanol also is useful, but more expensive than isopropanol and ethanol. Methyl alcohol would be equally useful were it not toxic. Mixtures of such alcohols are also useful.

Because the low-boiling alcohol reduces viscosity and surface tension, it allows the latex adhesive to penetrate into a paper stack without leaving such a thick spine that a ridge would be created upon removal of sheets of paper from an edge-padded tablet. For this reason, the low-boiling alcohol preferably is used in as large a quantity as possible as long as it does not cause any precipitation of the latex. The use of such alcohols in amounts above 22% by weight of the latex adhesive might cause the latex adhesive to agglomerate. At amounts below 10%, the desirably fast drying would not be achieved, and adhesive edge-paddings might be so stiff and brittle as to allow the edge-padded stack to delaminate under shock.

While not completely understanding the phenomenon, it is theorized that the non-crystallizing polyhydric alcohol acts as a plasticizer and, in doing so, improves the adhesive strength and also reduces the freezing point of the latex adhesive. This can make it unnecessary to employ heating when shipping the latex adhesive in cold temperatures. Unlike many conventional plasticizers, the polyhydric alcohols can be used without any environmental concerns.

A preferred non-crystallizing polyhydric alcohol is sorbitol. Noncrystalline forms of sorbitol are "Sorbo", "Sorbitol Special", and "Arlex," each of which is available from ICI Americas. Other useful non-crystallizing polyhydric alcohols include pentaerythritol, glycerol, propylene glycol, and low-molecular-weight polyethylene gly-

3

col.

Testing indicates that dibutyl phthalate can be substituted into the latex adhesive in place of part of the non-crystallizing polyhydric alcohol, with little or no sacrifice in qualities, but dibutyl phthalate is a suspected carcinogen. Similarly, it also has been demonstrated that diethyl phthalate can be substituted for part of the non-crystallizing polyhydric alcohol, but its use may give rise to environmental concerns.

When the amount of non-crystallizing polyhydric alcohol is substantially more than 9% by weight of the latex adhesive, the dried adhesive tends to be deficient in adhesion. At amounts substantially below 3%, the dried adhesive tends to be undesirably stiff and brittle.

Adhesion Value

"Adhesion Value" is obtained using a paper tablet of 21.6 x 27.9 cm which is broken apart halfway down the padded edge, forming two smaller tablets. From the lower tablet, approximately eight sheets are torn off before subjecting the next ten consecutive sheets to the following test. A tension measurement device, namely the "Digital Force Gauge Model DFGRS50" from Chatillon is used to measure "Adhesion Values" in Newtons (N). With the unpadded end of the top sheet of the tablet placed in the clamp of the force gauge, the center of the unpadded end of the tablet is gripped by one's thumb, fingers, and palm of one hand and pulled slowly until the bond fails. The adhesion value is the average of ten results, reported in Newtons (N).

An adhesion of at least 30 Newtons has been found sufficient to allow integrity of the pad and yet not exhibit excessive ridge build up of the spine, with at least 45 Newtons being preferred. Increasing adhesion will correspondingly tend to increase ridge formation and delamination of the paper, and thus an upper limit is in reality dependent on the paper used to form the tablet.

Cellulose Thickeners

Used in the examples were the following cellulose thickeners:

| Trade Name | Source |
|---|---|
| "Natrosol" 250HBR and 250H4BR hydroxyethyl cellulose | Aqualon USA |
| "Tixogel" LX bentonite clay gellant | United Catalysts, Inc. |
| "CMC" MT carboxymethyl cellulose | Aqualon USA |

In the following examples, all parts are by weight.

Example 1

A latex adhesive was made having the following composition:

| Parts | |
|---|---|
| 60.0 | "Airflex" 300 EVA copolymer, Tg=18°C |
| 13.0 | ethyl alcohol |
| 6.0 | "Sorbitol Special" a polyhydric alcohol |
| 0.4 | "Natrosol" 250HBR, hydroxyethyl cellulose |
| 20.6 | water |

The adhesive was brushed by hand onto one of the short sides of a stack of paper sheets of 21.6 x 27.9 cm. After drying for 30 minutes, the stack was cleanly cut apart with a sharp knife into individual tablets. The spine of the adhesive edge-padding of each tablet had a substantially uniform thickness of 0.2-0.3 mm, and adhesive had penetrated 0.15 mm into the stack. Individual sheets were stripped cleanly from the top of the stack without tearing, leaving behind only occasional vestiges of an upstanding ridge of adhesive, and each such vestige would disappear before more than three or four additional sheets had been torn off. The adhesion value was 81 N.

Examples 2-7

A series of tablets were made as in Example 1 except substituting isopropyl alcohol for the ethyl alcohol and, in Examples 3-7, substituting other polyhydric alcohols for the "Sorbitol Special" as indicated in Table I. The adhesion value (N) is also reported.

### Table I

| Example | Polyhydric alcohol | Adhesion Value (N) |
|---|---|---|
| 2 | "Sorbitol Special" | 69 |
| 3 | "Arlex" sorbitol | 71 |
| 4 | mannitol | 55 |
| 5 | glycerol | 56 |
| 6 | 1,2-propanediol | 61 |
| 7 | polyethylene glycol (300 MW) | 49 |

Examples 8-14

A series of tablets were made as in Examples 1-7, except substituting "Airflex" 100 HS EVA copolymer (Tg = 5°C) for "Airflex" 300 EVA copolymer. In Examples 8-14, polyhydric alcohol levels were maintained at 5 percent by weight of the latex adhesive. The levels of low-boiling alcohol and thickening agents were as in Examples 1-7. Adhesion values (N) for Examples 8-14 are reported in Table II.

### Table II

| Example | Polyhydric Alcohol | Low Boiling Alcohol | Adhesion Value (N) |
|---|---|---|---|
| 8 | "Sorbitol Special" | ethanol | 49 |
| 9 | "Sorbitol Special" | isopropanol | 42 |
| 10 | "Arlex Sorbitol" | isopropanol | 45 |
| 11 | mannitol | isopropanol | 44 |
| 12 | glycerol | isopropanol | 42 |
| 13 | 1,2-pro-panediol | isopropanol | 42 |
| 14 | polyethylene glycol (300 MW) | isopropanol | 45 |

Examples 15-16

Tablets were made as in Example 2 except using different cellulose thickeners in amounts indicated in Table III and reducing the amounts of water to compensate for increased amounts of the thickener. Table III also includes Example 2 for comparison:

## Table III

| Example | Cellulose Thickener | Parts | Adhesion Value (N) |
|---------|---------------------|-------|--------------------|
| 2 | "Natrosol" 250 HBR | 0.4 | 69 |
| 15 | "Tixogel" LX | 0.8 | 64 |
| 16 | "CMC" MT | 1.0 | 60 |

The latex adhesive of Example 15 was found to be lumpy.

Example 17

Tablets were made as in Example 2 except using a latex adhesive of the following composition:

Parts

66.0 DL-238NA styrene/butadiene copolymer from Dow Chemical Co., Tg = 9°C

13.0 isopropyl alcohol

6.0 "Sorbitol Special" polyhydric alcohol

0.4 "Natrosol" 250HBR hydroxyethyl cellulose

14.6 water

Examples 18-20

Tablets were made as in Example 17 except for changes as indicated in Table IV. Example 17 is included in Table IV for comparison.

## Table IV

| Example | Alcohol | Amt. | Plasticizer | Amt. | Cell. Thck. | Amt. | Water Amt. |
|---------|---------|------|-------------|------|-------------|------|------------|
| 17 | iPrOH | 13.0 | "Sorb Spec" | 6.0 | HBR | 0.4 | 14.6 |
| 18 | EtOH | 13.0 | "Sorb Spec" | 6.0 | HBR | 0.4 | 14.6 |
| 19 | iPrOH | 14.6 | DBP | 2.0 | H4BR | 0.5 | 16.9 |
| 20 | iPrOH | 14.5 | DEP | 4.5 | H4BR | 0.5 | 14.5 |

iPrOH = isopropyl alcohol
EtOH = ethyl alcohol
"Sorb Spec" = "Sorbitol Special"

```
DBP = dibutyl phthalate
DEP = diethyl phthalate
HBR = "Natrosol" 250HBR
H4BR = "Natrosol" 250H4BR
```

Testing of the tablets of Examples 17-20 is reported in Table V.

## Table V

| Example | Adhesion Value (N) |
|---------|--------------------|
| 17 | 71 |
| 18 | 48 |
| 19 | 60 |
| 20 | 59 |

## Claims

1.  A method for producing adhesively edge-padded tablets comprising the steps of:
    1) adhesively edge-padding a stack of paper with a latex adhesive which has a viscosity at room temperature of from 600 to 8000 cps and comprises by weight:
    a) from 25 to 40 parts (dry basis) of a latex of a polymer having a Tg from -10°C to 30°C, which when blended with a non-crystallizing polyhydric alcohol is film-forming,
    b) from 10 to 22 parts of at least one low-boiling alcohol having a boiling point below 120°C,
    c) from 3 to 9 parts of at least one non-crystallizing polyhydric alcohol, and
    d) water in an amount to provide 100 parts of ingredients a) through d); and
    2) allowing said applied latex adhesive to dry.

2.  The method of claim 1 wherein said polymer is selected from EVA copolymers and SB copolymers.

3.  The method of claim 1 wherein said polymer solids provide less than 35% by weight of said latex adhesive.

4.  The method of claim 1 wherein said latex adhesive comprises at least 0.1 part of a cellulose thickener.

5.  The method of claim 4 wherein said cellulose thickener comprises up to 1.5 parts of said latex adhesive.

6.  The method of claim 4 wherein said cellulose thickener is selected from hydroxyethyl cellulose, carboxymethyl cellulose, and hydroxypropyl cellulose.

7.  The method of claim 1 wherein said low-boiling alcohol is selected from isopropanol and ethanol.

8.  The method of claim 1 wherein said non-crystallizing polyhydric alcohol comprises sorbitol.

9.  The method of claim 1 wherein a part of said non-crystallizing polyhydric alcohol is substituted by a plasticizer selected from dibutyl phthalate and diethyl phthalate.

10. The method of claim 1 wherein the viscosity of said latex adhesive at room temperature is from 1000 to 5000 cps.

11. A latex adhesive having a viscosity at room temperature of from 600 to 8000 cps and is useful for adhesively edge-padding a stack of paper that is to be cut into tablets, said latex adhesive comprising by weight:

7

a) from 25 to 40 parts (dry basis) of a latex of a polymer having a Tg from -10°C to 30°C, which latex when blended with a non-crystallizing polyhydric alcohol is film-forming,
b) from 10 to 22 parts of at least one low-boiling alcohol,
c) from 3 to 9 parts of at least one non-crystallizing polyhydric alcohol, and
d) water in an amount to provide 100 parts of ingredients a) through d).

12. The latex adhesive of claim 11 wherein said polymer is selected from EVA copolymers and SB copolymers.

13. The latex adhesive of claim 11 having a viscosity at room temperature of from 1000 to 5000 cps.

14. The latex adhesive of claim 11 further comprising at least 0.1 part of a cellulose thickener.

15. The latex adhesive of claim 14 wherein said cellulose thickener is selected from hydroxyethyl cellulose, carboxymethyl cellulose, and hydroxypropyl cellulose.

16. The latex adhesive of claim 11 wherein said low-boiling alcohol is selected from isopropanol and ethanol.

17. The latex adhesive of claim 11 wherein said non-crystallizing polyhydric alcohol comprises sorbitol.

18. A paper tablet comprising a latex adhesive having a viscosity at room temperature of from 600 to 8000 cps, said latex adhesive comprising by weight:
a) from 25 to 40 parts (dry basis) of a latex of a polymer having a Tg from -10°C to 30°C, which latex when blended with a non-crystallizing polyhydric alcohol is film forming,
b) from 10 to 22 parts of at least one low-boiling alcohol,
c) from 3 to 9 parts of at least one non-crystallizing polyhydric alcohol, and
d) water in an amount to provide 100 parts of ingredients a) through d).

**Patentansprüche**

1. Verfahren zur Herstellung von mit Kleber kantenverleimten Blöcken, umfassend die folgenden Schritte:
1) Kantenverleimen eines Stapels Papier mit einem Latexkleber, der bei Zimmertemperatur eine Viskosität im Bereich von 600 bis 8000 cps besitzt und folgendes enthält:
a) 25 bis 40 Gewichtsteile (Trockenbasis) eines Latex aus einem Polymer mit einer Glasumwandlungstemperatur von -10°C bis 30°C, der einen Film bildet, wenn er mit einem nichtkristallisierenden mehrwertigen Alkohol vermischt wird,
b) 10 bis 22 Gewichtsteile von mindestens einem niedrigsiedenden Alkohol, dessen Siedepunkt unter 120°C liegt,
c) 3 bis 9 Gewichtsteile von mindestens einem nichtkristallisierenden mehrwertigen Alkohol, und
d) Wasser in einer Menge, die 100 Gewichtsteile der Bestandteile a) bis d) ergibt; und
2) Trocknenlassen des aufgetragenen Latexklebers.

2. Verfahren nach Anspruch 1, bei dem das Polymer ausgewählt ist aus EVA-Copolymeren und SB-Copolymeren.

3. Verfahren nach Anspruch 1, bei dem die Polymerfeststoffe weniger als 35 Gew.-% des Latexklebers ausmachen.

4. Verfahren nach Anspruch 1, bei dem der Latexkleber mindestens 0,1 Teil Celluloseverdickungsmittel umfaßt.

5. Verfahren nach Anspruch 4, bei dem das Celluloseverdickungsmittel bis zu 1,5 Teile des Latexklebers umfaßt.

6. Verfahren nach Anspruch 4, bei dem das Celluloseverdickungsmittel ausgewählt ist aus Hydroxyethylcellulose, Carboxymethylcellulose und Hydroxypropylcellulose.

7. Verfahren nach Anspruch 1, bei dem der niedrigsiedende Alkohol ausgewählt ist aus Isopropanol und Ethanol.

**8.** Verfahren nach Anspruch 1, bei dem der nichtkristallisierende mehrwertige Alkohol Sorbitol umfaßt.

**9.** Verfahren nach Anspruch 1, bei dem ein Teil des nichtkristallisierenden mehrwertigen Alkohols durch einen Weichmacher substituiert ist, der ausgewählt ist aus Dibutylphthalat und Diethylphthalat.

**10.** Verfahren nach Anspruch 1, bei dem die Viskosität des Latexklebers bei Zimmertemperatur 1000 bis 5000 cps beträgt.

**11.** Latexkleber, der bei Zimmertemperatur eine Viskosität im Bereich von 600 bis 8000 cps besitzt und zum Kantenverleimen eines Stapels Papier geeignet ist, der zu Blöcken geschnitten werden soll, wobei der Latexkleber folgendes enthält:
a) 25 bis 40 Gewichtsteile (Trockenbasis) eines Latex aus einem Polymer mit einer Glasumwandlungstemperatur von -10°C bis 30°C, wobei der Latex einen Film bildet, wenn er mit einem nichtkristallisierenden mehrwertigen Alkohol vermischt wird,
b) 10 bis 22 Gewichtsteile von mindestens einem niedrigsiedenden Alkohol,
c) 3 bis 9 Gewichtsteile von mindestens einem nichtkristallisierenden mehrwertigen Alkohol, und
d) Wasser in einer Menge, die 100 Gewichtsteile der Bestandteile a) bis d) ergibt.

**12.** Latexkleber nach Anspruch 11, bei dem das Polymer ausgewählt ist aus EVA-Copolymeren und SB-Copolymeren.

**13.** Latexkleber nach Anspruch 11, der bei Zimmertemperatur eine Viskosität von 1000 bis 5000 cps besitzt.

**14.** Latexkleber nach Anspruch 11, des weiteren umfassend mindestens 0,1 Teile eines Celluloseverdickungsmittels.

**15.** Latexkleber nach Anspruch 14, bei dem das Celluloseverdickungsmittel ausgewählt ist aus Hydroxyethylcellulose, Carboxymethylcellulose und Hydroxypropylcellulose.

**16.** Latexkleber nach Anspruch 11, bei dem der niedrigsiedende Alkohol ausgewählt ist aus Isopropanol und Ethanol.

**17.** Latexkleber nach Anspruch 11, bei dem der nichtkristallisierende mehrwertige Alkohol Sorbitol umfaßt.

**18.** Papierblock umfassend einen Latexkleber, der bei Zimmertemperatur eine Viskosität von 600 bis 8000 cps besitzt, wobei der Latexkleber folgendes umfaßt:
a) 25 bis 40 Gewichtsteile (Trockenbasis) eines Latex aus einem Polymer mit einer Glasumwandlungstemperatur von -10°C bis 30°C, wobei der Latex einen Film bildet, wenn er mit einem nichtkristallisierenden mehrwertigen Alkohol vermischt wird,
b) 10 bis 22 Gewichtsteile von mindestens einem niedrigsiedenden Alkohol,
c) 3 bis 9 Gewichtsteile von mindestens einem nichtkristallisierenden mehrwertigen Alkohol, und
d) Wasser in einer Menge, die 100 Gewichtsteile der Bestandteile a) bis d) ergibt.

## Revendications

**1.** Procédé pour produire des blocs adhésivement reliés par le bord, ledit procédé comprenant les étapes consistant à :
1) relier adhésivement par le bord une pile de papier avec un adhésif du type latex qui a une viscosité à la température ambiante de 600 à 8000 centipoises (0,6-8 Pa.s) et qui comprend en poids :
a) de 25 à 40 parties (en poids sec) d'un latex, d'un polymère ayant une Tg de -10° C à +30° C, qui lorsqu'il est mélangé avec un alcool polyhydrique non-cristallisant est filmogène,
b) de 10 à 22 parties d'au moins un alcool à bas point d'ébullition ayant un point d'ébullition inférieur à 120° C,
c) de 3 à 9 parties d'au moins un alcool polyhydrique non-cristallisant, et
d) de l'eau pour compléter à 100 parties l'ensemble des ingrédients a) à d) ; et
2) permettre au dit adhésif de type latex de sécher.

**2.** Procédé suivant la revendication 1, dans lequel ledit polymère est choisi parmi les copolymères EVA et les copolymères SB.

3. Procédé suivant la revendication 1, dans lequel les matières solides dudit polymère fournissent moins de 35 % en poids dudit adhésif de type latex.

4. Procédé suivant la revendication 1, dans lequel ledit adhésif de type latex comprend au moins 0,1 partie d'épaississant cellulosique.

5. Procédé suivant la revendication 4, dans lequel ledit épaississant cellulosique représente jusqu'à 1,5 parties dudit adhésif de type latex.

6. Procédé suivant la revendication 4, dans lequel ledit épaississant cellulosique est choisi parmi les hydroxyéthylcellulose, carboxyméthylcellulose et hydroxypropylcellulose.

7. Procédé suivant la revendication 1, dans lequel ledit alcool à bas point d'ébullition est choisi parmi les isopropanol et éthanol.

8. Procédé suivant la revendication 1, dans lequel ledit alcool polyhydrique non-cristallisant comprend le sorbitol.

9. Procédé suivant la revendication 1, dans lequel une portion dudit alcool polyhydrique non-cristallisant est remplacée par un plastifiant choisi parmi les phtalate de dibutyle et phtalate de diéthyle.

10. Procédé suivant la revendication 1, dans lequel la viscosité dudit adhésif de type latex est comprise, à la température ambiante, entre 1000 et 5000 centipoises.

11. Adhésif du type latex ayant une viscosité à la température ambiante de 600 à 8000 centipoises (0,6-8 Pa.s) et utile pour relier adhésivement par le bord une pile de papier devant être découpée en blocs, ledit adhésif de type latex comprenant en poids :
    a) de 25 à 40 parties (en poids sec) d'un latex, d'un polymère ayant une Tg de -10° C à +30° C, qui lorsqu'il est mélangé avec un alcool polyhydrique non-cristallisant est filmogène,
    b) de 10 à 22 parties d'au moins un alcool à bas point d'ébullition ayant un point d'ébullition inférieur à 120° C,
    c) de 3 à 9 parties d'au moins un alcool polyhydrique non-cristallisant, et
    d) de l'eau pour compléter à 100 parties l'ensemble des ingrédients a) à d).

12. Adhésif de type latex suivant la revendication 11, dans lequel ledit polymère est choisi parmi les copolymères EVA et les copolymères SB.

13. Adhésif de type latex suivant la revendication 11, caractérisé en ce qu'il a une viscosité comprise, à la température ambiante, entre 1000 et 5000 centipoises.

14. Adhésif de type latex suivant la revendication 11, comprenant en outre au moins 0,1 partie d'épaississant cellulosique.

15. Adhésif de type latex suivant la revendication 14, dans lequel ledit épaississant cellulosique est choisi parmi les hydroxyéthylcellulose, carboxyméthylcellulose et hydroxypropylcellulose.

16. Adhésif de type latex suivant la revendication 11, dans lequel ledit alcool à bas point d'ébullition est choisi parmi les isopropanol et éthanol.

17. Adhésif de type latex suivant la revendication 11, dans lequel ledit alcool polyhydrique non-cristallisant comprend le sorbitol.

18. Bloc de papier comprenant un adhésif de type latex ayant une viscosité à la température ambiante de 600 à 8000 centipoises (0,6-8 Pa.s), ledit adhésif de type latex comprenant en poids :
    a) de 25 à 40 parties (en poids sec) d'un latex, d'un polymère ayant une Tg de -10° C à +30° C, qui lorsqu'il est mélangé avec un alcool polyhydrique non-cristallisant est filmogène,
    b) de 10 à 22 parties d'au moins un alcool à bas point d'ébullition ayant un point d'ébullition inférieur à 120° C,

c) de 3 à 9 parties d'au moins un alcool polyhydrique non-cristallisant, et
d) de l'eau pour compléter à 100 parties l'ensemble des ingrédients a) à d).